# EUROPEAN PATENT APPLICATION

(11) **EP 4 207 431 A1**
(43) Date of publication of application: **05.07.2023**
(21) Application number: 23150363.2
(22) Date of filing: 04.01.2023
(51) Int. Cl.: H01M 10/42, H01M 50/284, H01M 50/296, H01M 50/298, H01M 50/569, H01R 12/00, H05K 1/00

(54) **BATTERY PACK CONNECTOR**

(30) Priority: 04.01.2022 KR 20220000931
(71) Applicant: Samsung SDI Co., Ltd., Yongin-si, Gyeonggi-do 17084 (KR)
(72) Inventor: PARK, Seokryun, 17084 Yongin-si (KR)
(74) Representative: Marks & Clerk LLP

(57) **Abstract**

In a battery pack connector, respective pad portions are arranged at corresponding positions in respective layers in central portions of the respective layers of the battery pack connector.

## Description

### BACKGROUND

### 1. Field

One or more embodiments relate to a battery pack connector.

### 2. Description of the Related Art

In general, secondary batteries refer to batteries that can be repeatedly charged and discharged, unlike non-rechargeable primary batteries. Secondary batteries are used as energy sources of devices, such as mobile devices, electric vehicles, hybrid electric vehicles, electric bicycles, and uninterruptible power supplies. Single-cell secondary batteries or a module or pack form of secondary batteries each including a plurality of cells connected to each other as a unit are used according to the types of devices that employ secondary batteries.

A battery pack includes a battery protection circuit module (PCM) for protecting a secondary battery from problems, such as short circuit, disconnection, overcurrent, and overvoltage that may occur during charging and discharging of the secondary battery.

The PCM includes a flexible circuit board (FPCB) coupled to a battery module, and a connector is mounted on the FPCB.

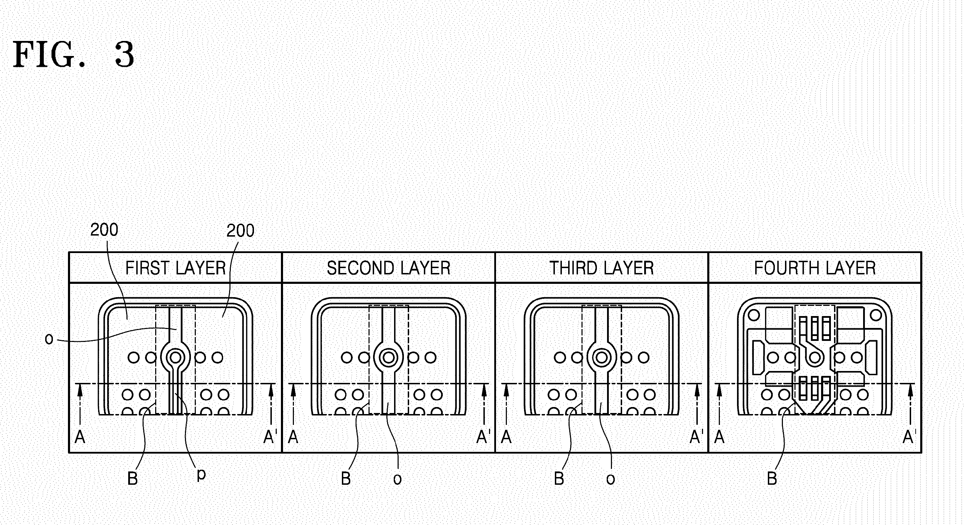

FIGS. 3 to 5 show a pad arrangement structure of a connector in the related art.

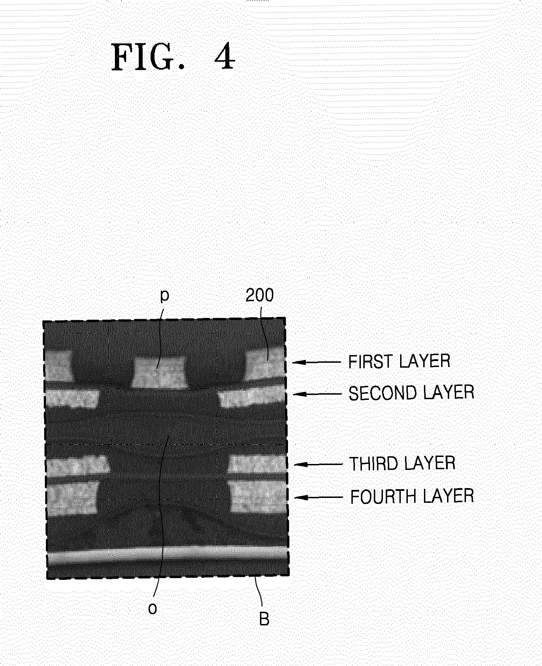

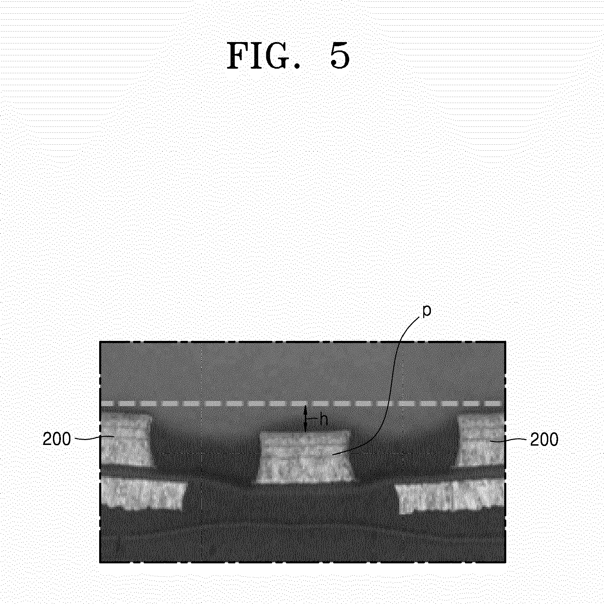

FIG. 3 shows a pad arrangement structure for each layer of a connector in the related art. FIG. 4 is a cross-sectional view of region B of Figure 3, taken along a line a-a' of FIG. 3, illustrating a pad arrangement structure for each layer of a connector in the related art. FIG. 5 is a cross-sectional view of a region c of FIG. 4, illustrating a state in which a pad step-difference is generated when forming a pad arrangement structure for each layer of a connector in the related art.

Referring to FIGS. 3 to 5, in a pad arrangement structure of a connector in the related art, according to a structure in which a pad p is arranged in an open portion o only in a central portion of a first layer, which is an uppermost layer, and the pad p is not arranged in each of a second layer and a third layer, a step-difference h is generated between a portion in which the pad p is arranged in the central portion of the first layer and a metal unit 200, and thus the central portion of the connector may be depressed, and rigidity of the connector may be reduced.

### SUMMARY

One or more embodiments include a battery pack connector in which separation and damage of the connector are prevented by improving rigidity of the connector.

However, this is an example, and the disclosure is not limited thereto.

Additional aspects will be set forth in part in the description which follows and, in part, will be apparent from the description, or may be learned by practice of the presented embodiments of the disclosure.

In a battery pack connector according to an embodiment, respective pad portions are arranged at corresponding positions in respective layers in central portions of the respective layers of the battery pack connector.

In the battery pack connector according to an embodiment, first to third pad portions are arranged between first to fourth open portions, respectively, in respective layers of the battery pack connector.

In the battery pack connector according to an embodiment, the first to third pad portions are arranged on each of both sides of a central terminal portion in respective layers.

In the battery pack connector according to an embodiment, the second and third pad portions are respectively arranged on both sides on the first pad portion to be spaced apart from each other.

In the battery pack connector according to an embodiment, the second and third pad portions are symmetrically disposed with respect to the first pad portion.

Other aspects, features, and advantages other than those described above will become clear from the detailed description, claims, and drawings for implementing the disclosure below.

At least some of the above features that accord with the invention and other features according to the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 shows a battery pack according to an embodiment;
FIG. 2 is an exploded perspective view of a battery pack according to an embodiment;
FIG. 3 shows a pad arrangement structure for each layer of a connector in the related art;
FIG. 4 is a cross-sectional view taken along a line a-a' of FIG. 3, illustrating a pad arrangement structure for each layer of a connector in the related art;
FIG. 5 is an enlarged view of FIG. 4, and is a cross-sectional view illustrating a state in which a pad step-difference is generated when forming a pad arrangement structure for each layer of a connector in the related art;
FIG. 6 shows a pad arrangement structure in a first layer of a connector according to an embodiment;
FIG. 7 shows a pad arrangement structure in a second layer of a connector according to an embodiment;
FIG. 8 shows a pad arrangement structure in a third layer of a connector according to an embodiment;
FIG. 9 shows a pad arrangement structure in a fourth layer of a connector according to an embodiment; and
FIG. 10 is a cross-sectional view taken along a line A-A' of FIG. 9, illustrating a pad arrangement structure according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

As the disclosure allows for various changes and numerous embodiments, particular embodiments will be illustrated in the drawings and described in detail in the written description. However, this is not intended to limit the disclosure to particular modes of practice, and it is to be appreciated that all changes, equivalents, and substitutes that do not depart from the technical scope of the claims are encompassed in the disclosure. In the description, even if shown in different embodiments, like reference numerals in the drawings denote like elements.

The disclosure will now be described more fully with reference to the accompanying drawings.

In the following embodiments, while such terms as "first," "second," etc., may be used to describe various components, such components must not be limited to the above terms.

In the following embodiments, an expression used in the singular encompasses the expression of the plural, unless it has a clearly different meaning in the context.

In the following embodiments, it is to be understood that the terms such as "including," "having," and "comprising" are intended to indicate the existence of the features or components disclosed in the specification, and are not intended to preclude the possibility that one or more other features and components may be added.

Sizes of components in the drawings may be exaggerated for convenience of explanation. In other words, since sizes and thicknesses of components in the drawings are arbitrarily illustrated for convenience of explanation, the following embodiments are not limited thereto.

In the following embodiments, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process order may be performed differently from the described order. For example, two consecutively described processes may be performed substantially at the same time or performed in an order opposite to the described order.

The terms used in the present specification are merely used to describe particular embodiments, and are not intended to limit the inventive concept. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

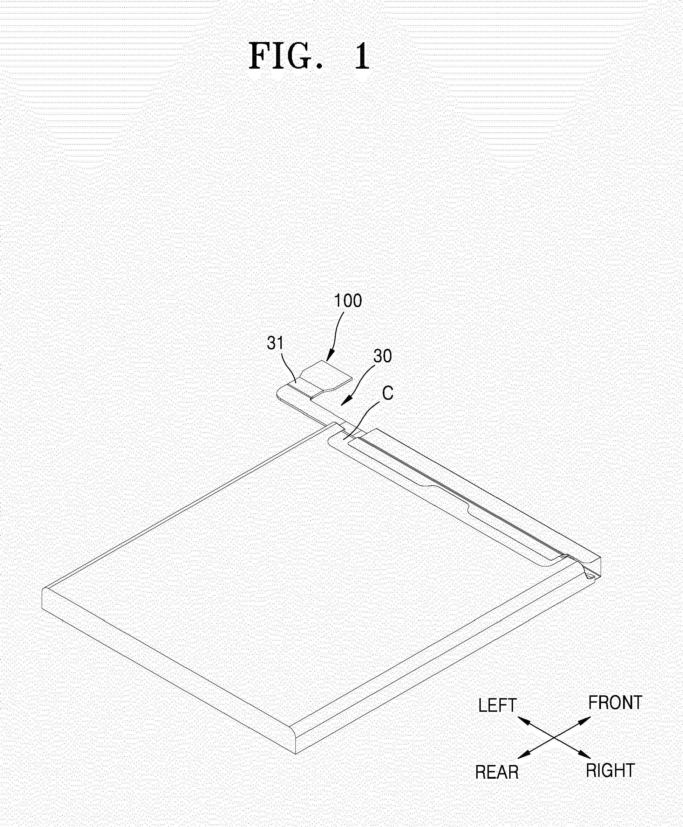

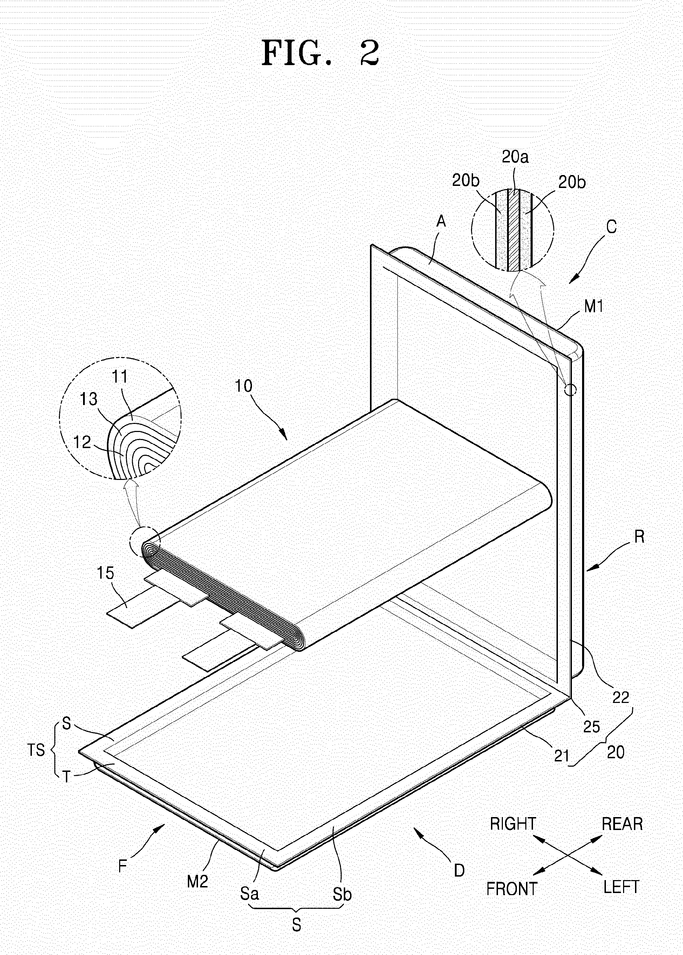

Hereinafter, a battery pack connector according to an embodiment is described with reference to FIGS. 1 and 2.

FIG. 1 shows a battery pack according to an embodiment. FIG. 2 is an exploded perspective view of a battery pack according to an embodiment.

Referring to FIGS. 1 and 2, a battery pack connector according to an embodiment includes a battery cell C. The battery cell C includes an accommodating portion A that accommodates an electrode assembly 10, and a sealing portion TS that extends along an edge of the accommodating portion A to seal the accommodating portion A. The electrode assembly 10 may be formed in a roll form by winding first and second electrode plates 11 and 12, which are arranged to face each other with a separator 13 therebetween, or may be formed in a stack form by stacking a plurality of first and second electrode plates 11 and 12 with the separator 13 therebetween.

An electrode tab 15 forming a charge/discharge path may be connected to the electrode assembly 10. The electrode tab 15 may include two electrode tabs 15 respectively having different polarities and electrically connected to the electrode assembly 10, and each of the two electrode tabs 15 connected to the electrode assembly 10 in the accommodating portion A may be drawn out through a front surface F of the accommodating portion A.

The accommodating portion A in which the electrode assembly 10 is accommodated may be formed in a substantially rectangular parallelepiped shape. In particular, the accommodating portion A may include the front surface F from which the electrode tab 15 is drawn out, a rear surface R opposite to the front surface F, a pair of main surfaces M1 and M2 connecting the front surface F and the rear surface R and occupying a relatively large area, and a pair of side surfaces D connecting the front surface F and the rear surface R and occupying a relatively small area.

The pair of side surfaces M1 and M2 may occupy the largest area among the surfaces of the accommodating portion A, and may be formed with a greater area than the areas of the front surface F, the rear surface R, and the pair of side surfaces D. Also, the front surface F, the rear surface R, and the pair of side surfaces D may be connected to the pair of main surfaces M1 and M2 at different corners along the pair of main surfaces M1 and M2 of the accommodating portion A. In an embodiment, the pair of main surfaces M1 and M2 and the pair of side surfaces D may respectively be formed at positions facing each other. For example, the pair of main surfaces M1 and M2 may include first and second main surface M1 and M2, which face each other.

The battery cell C may further include the sealing portion TS formed along the edge of the accommodating portion A to seal the accommodating portion A. The accommodating portion A accommodating the electrode assembly 10 and the sealing portion TS sealing the accommodating portion A may be formed from an exterior material 20 continuously formed to surround the electrode assembly 10. That is, the exterior material 20 may form the accommodating portion A that accommodates the electrode assembly 10 while surrounding the electrode assembly 10, and an excess portion of the exterior material 20, which remains after forming the accommodating portion A, may form the sealing portion TS that seals the accommodating portion A.

The exterior material 20 may include a flexible exterior material 20, such as a pouch, and more particularly, may include a metal layer 20a, such as a thin aluminum plate, and an insulating layer 20b formed on both surfaces of the metal layer 20a, such as a resin coating layer. At this time, the metal layer 20a may be exposed to the outside through a cross section where the exterior material 20 is horizontally cut. As will be described below, the metal layer 20a may be exposed through an edge of the sealing portion TS in which first and second exterior materials 21 and 22 are coupled to each other to face each other with the electrode assembly 10 therebetween.

In an embodiment, the exterior material 20 may include the first and second exterior materials 21 and 22, which are coupled to each other to face each other with the electrode assembly 10 therebetween. In a state in which the electrode assembly 10 is between the first and second exterior materials 21 and 22, after folding the first and second exterior materials 21 and 22 through a folding portion 25 connecting the first and second exterior materials 21 and 22 to each other such that the first and second exterior materials 21 and 22 overlap each other, the contacting portions of the first and second exterior materials 21 and 22 are mutually coupled to each other along edge areas of the first and second exterior materials 21 and 22 by thermal fusion or the like, an inner area of the first and second exterior materials 21 and 22, which face each other with the electrode assembly 10 therebetween, may be formed as the accommodating portion A, and edge areas of the first and second exterior materials 21 and 22 coupled to each other may be formed as the sealing portion TS.

The sealing portion TS may be continuously formed along the edge areas of the first and second exterior materials 21 and 22, and may be continuously formed along the side portions of the first and second exterior materials 21 and 22 except for the folding portion 25. Inparticular, the sealing portion TS may include a terrace portion T extending in a direction of the front surface F of the accommodating portion A, and a side sealing portion S extending in a direction of the side surface D of the accommodating portion A. At this time, the electrode tab 15 connected to the electrode assembly 10 in the accommodating portion A may be drawn out of the accommodating portion A through the terrace portion T extending in the direction of the front surface F of the accommodating portion A. Also, a protection circuit module 30 may be seated on the terrace portion T, and the electrode tab 15 drawn out through the terrace portion T may be bent to be connected to the protection circuit module 30 seated on the terrace portion T.

The side sealing portion S may include a main body Sb of the side sealing portion S at a position corresponding to the accommodating portion A, and a front end portion Sa of the side sealing portion S, which extends from the main body Sb of the side sealing portion S to a position out of the accommodating portion A. The side sealing portion S may be folded toward the accommodating portion A to reduce the area occupied by the entire battery cell C, and as to be described below, the side sealing portion S may be folded toward the accommodating portion A through primary folding and secondary folding. That is, in the primary folding, the main body Sb of the side sealing portion S at a position corresponding to the accommodating portion A and the front end portion Sa of the side sealing portion S at a position outside the accommodating portion A may be folded up together, and after the primary folding, the secondary folding in which the front end portion Sa of the side sealing portion S at a position outside the accommodating portion A is folded so that the front surface F of the accommodating portion A and the terrace portion T are concavely drawn toward a corner where the front surface F and the terrace portion T are in contact with each other may be performed. By the primary folding and the secondary folding, the main body Sb of the side sealing portion S may be arranged adjacent to the side surface D of the accommodating portion A while being folding upwardly toward the side surface D of the accommodating portion A, and among the side sealing portion S, the front end portion Sa of the side sealing portion S at a position outside the accommodating portion A may form a dog ear concavely drawn toward a corner formed by the front surface F of the accommodating portion A and the terrace portion T.

Through the edge of the side sealing portion S, the metal layer 20a may be exposed through the cross section where the exterior material 20 forming the side sealing portion S is horizontally cut, and because the main body Sb of the side sealing portion S is folded on the side surface D of the accommodating portion A, the metal layer 20a exposed through the edge of the main body Sb of the side sealing portion S may not protrude from the side surface D of the accommodating portion A. The front end portion Sa of the side sealing portion S is folded to be concavely drawn toward a corner formed by the front surface F of the accommodating portion A and the terrace portion T, and thus the metal layer 20a exposed through the edge of the front end portion Sa of the side sealing portion S may not protrude from the front surface F of the accommodating portion A. That, in the side sealing portion S, the main body Sb of the side sealing portion S may be folded onto the side surface D of the accommodating portion A, and the front end portion Sa of the side sealing portion S may not protrude from the side surface of the accommodating portion A and the front surface F of the accommodating portion A while being folded toward a corner where the terrace portion T and the front surface F of the accommodating portion A are in contact with each other, and may be folded into a shape that follows the outer shape of the accommodating portion A.

In an embodiment, the outer shape of the battery cell C may generally follow the outer shape of the accommodating portion A, and the outer surface of the accommodating portion A, that is, the front surface F, the rear surface R, the main surface M, and the side surface D of the accommodating portion A, may substantially mean the outer surface of the battery cell C, that is, the front surface, the rear surface, the main surface, and the side surface of the battery cell C, respectively. For example, the battery cell C may further include the sealing portion TS sealing the accommodating portion A together with the accommodating portion A in which the electrode assembly 10 is accommodated. In this case, the sealing portion TS, that is, at least the side sealing portion S thereof, may be folded toward the side surface D and the front surface F of the accommodating portion A to minimize the area occupied by the battery cell C, and thus the outer shape of the battery cell C may generally follow the outer shape of the accommodating portion A, and accordingly, the front surface F, the rear surface R, the main surface M, and the side surface D of the accommodating portion A may substantially mean the front surface, rear surface, the main surface, and the side surface of the battery cell C, respectively. For example, the terrace portion T may be formed at a front position of the battery cell C, and because the terrace portion T is formed in a substantial plate shape rather than a plane shape such that the protection circuit module 30 is seated thereon, the front surface of the battery cell C may mean the front surface F of the accommodating portion A when the outer shape of the battery cell C is approximately rectangular parallelepiped. A connector 100 may be arranged on a flexible circuit board 31 of the protection circuit module 30. The protection circuit module 30 may include a connector 100 for connection to an external terminal and a flexible circuit board for electrical connection to the connector 100.

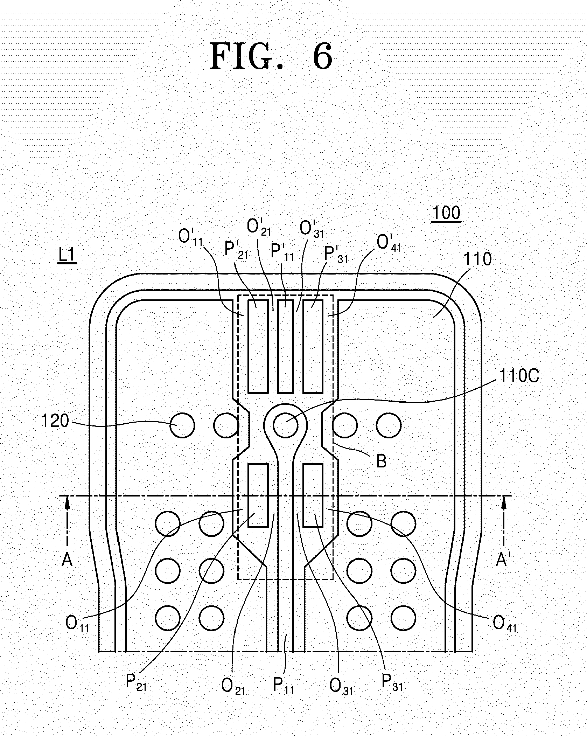

Hereafter, the structure of a connector 100 according to an embodiment is described with reference to FIGS. 6 to 10.

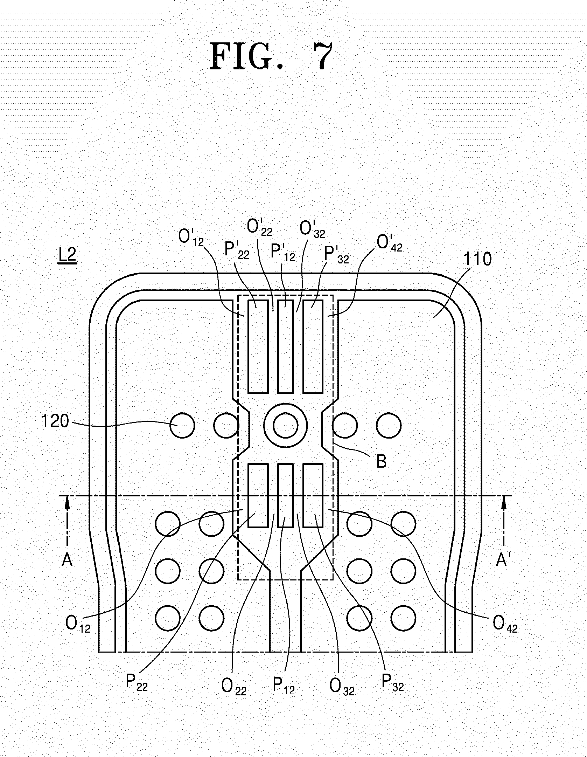

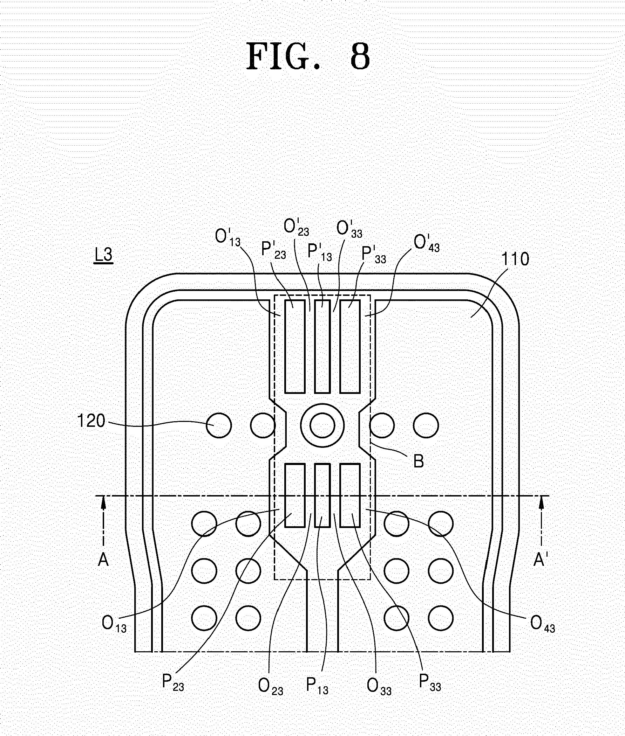

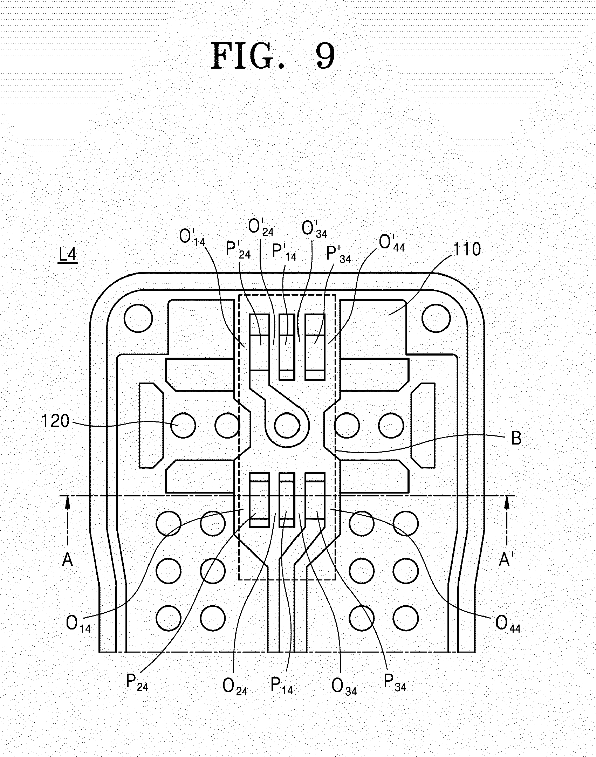

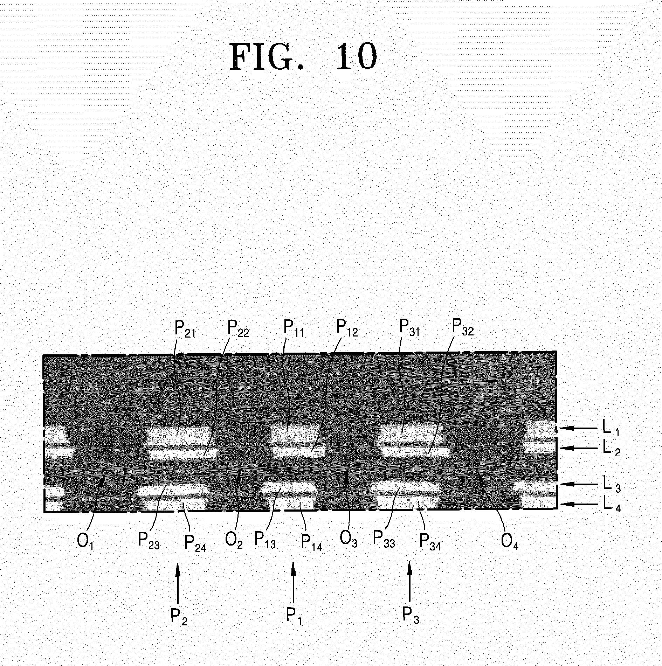

FIG. 6 shows a pad arrangement structure in a first layer of a connector according to an embodiment. FIG. 7 shows a pad arrangement structure in a second layer of a connector according to an embodiment. FIG. 8 shows a pad arrangement structure in a third layer of a connector according to an embodiment. FIG. 9 shows a pad arrangement structure in a fourth layer of a connector according to an embodiment. FIG. 10 is a cross-sectional view taken along a line A-A' of FIG. 9, illustrating a pad arrangement structure according to an embodiment.

Referring to FIGS. 6 to 10, in a battery pack connector according to an embodiment, respective pad portions P are arranged at corresponding positions in respective layers at central portions of the respective layers of the battery pack connector. The central portion means the center of a terminal portion 110. Metal portion 120 may combine and support the respective layers each other. In particular, in respective layers of the connector, first to third pad portions P₁, P₂, and P₃ may be respectively arranged between the first to fourth open portions O₁, O₂, O₃, and O₄. The pad portions includes a conductive material and may transmit a signal or current of an external terminal to the battery cell.

As described above, as shown in FIG. 10, in a layered structure of the connector, respective pads arranged for respective layers are arranged at corresponding positions for respective layers, and a step-difference may not be formed in a central portion of the connector as shown in FIGS. 3 to 5. In addition, the pad structure of the battery pack connector is stacked and arranged in a vertical direction, and thus rigidity of the battery pack connector may be improved, and tensile strength and shear strength of the battery pack connector may be improved.

O₁ includes O₁₁, O₁₂, O₁₃, O₁₄. O₂ includes O₂₁, O₂₂, O₂₃, O₂₄. O₃ includes O₃₁, O₃₂, O₃₃, O₃₄. O₄ includes O₄₁, O₄₂, O₄₃, O₄₄. In an embodiment, in respective layers, the first to fourth open portions O₁, O₂, O₃, and O₄ are arranged on both sides of a central terminal portion 110c, and the first to third pad portions P₁, P₂, and P₃ may be respectively arranged between the first to fourth open portions O₁, O₂, O₃, and O₄ In this way, a plurality of pad portions, which are spaced apart from each other, are respectively arranged on both sides of a central terminal portion, rigidity of a connector may be strengthened on both sides thereof. At this time, the second and third pads P₂ and P₃ may be arranged to be spaced apart from each other on both sides of the first pad P₁, and the second and third pads P₂ and P₃ may be arranged to be symmetrical to each other around the first pad P₁.

In particular, the first to fourth open portions O₁, O₂, O₃, and O₄ may each be arranged on one side of the central terminal portion 110c, and the first to third pad portions P₁, P₂, and P₃ may be respectively arranged between the first to fourth open portions O₁, O₂, O₃, and O₄. O'₁ includes O'n, O'₁₂, O'₁₃, O'₁₄. O'2 includes O'₂₁, O'₂₂, O'₂₃, O'₄. O'3 includes O'₃₁, O'₃₂, O'₃₃, O'₃₄. O'4 includes O'₄₁, O'₄₂, O'₄₃, O'₄₄. In addition, first to fourth open portions O'₁, O'₂, O'₃, and O'₄ may each be arranged on the other side of the central terminal portion 110c, and first to third pad portions P'₁, P'₂, and P'₃ may be respectively arranged between the first to fourth open portions O'₁, O'₂, O'₃, and O'₄. That is, the first, second, third pads comprises two separate pads which are arranged on each of both sides of a central terminal portion.

Referring to FIG. 6, in a first layer L1, which is the uppermost layer of the battery pack connector according to an embodiment, first to fourth open portions O₁₁, O₂₁, O₃₁, and O₄₁ may each be arranged on one side of the central terminal portion 110c, and first to third pad portions P₁₁, P₂₁, and P₃₁ may respectively be arranged between the first to fourth open portions O₁₁, O₂₁, O₃₁, and O₄₁. In addition, first to fourth open portions O'₁₁, O'₂₁, O'₃₁, and O'₄₁ may each be arranged on the other side of the central terminal portion 110c, and first to third pad portions P'₁₁, P'₂₁, and P'₃₁ may be respectively arranged between the first to fourth open portions O'₁₁, O'₂₁, O'₃₁, and O'₄₁.

Referring to FIG. 7, in a second layer L2 of the battery pack connector according to an embodiment, first to fourth open portions O₁₂, O₂₂, O₃₂, and O₄₂ may each be arranged on one side of the central terminal portion 110c, and first to third pad portions P₁₂, P₂₂, and P₃₂ may respectively be arranged between the first to fourth open portions O₁₂, O₂₂, O₃₂, and O₄₂. In addition, first to fourth open portions O'₁₂, O'₂₂, O'₃₂, and O'₄₂ may each be arranged on the other side of the central terminal portion 110c, and first to third pad portions P'₁₂, P'₂₂, and P'₃₂ may respectively be arranged between the first to fourth open portions O'₁₂, O'₂₂, O'₃₂, and O'₄₂.

Referring to FIG. 8, in a third layer L3 of the battery pack connector according to an embodiment, first to fourth open portions O₁₃, O₂₃, O₃₃, and O₄₃ may each be arranged on one side of the central terminal portion 110c, and first to third pad portions P₁₃, P₂₃, and P₃₃ may respectively be arranged between the first to fourth open portions O₁₃, O₂₃, O₃₃, and O₄₃. In addition, first to fourth open portions O'₁₃, O'₂₃, O'₃₃, and O'₄₃ may each be arranged on the other side of the central terminal portion 110c, and first to third pad portions P'₁₃, P'₂₃, and P'₃₃ may respectively be arranged between the first to fourth open portions O'₁₃, O₂₃, O'₃₃, and O'₄₃.

Referring to FIG. 9, in a fourth layer L4, which is a lowermost layer of the battery pack connector according to an embodiment, first to fourth open portions O₁₄, O₂₄, O₃₄, and O₄₄ may each be arranged on one side of the central terminal portion 110c, and first to third pad portions P₁₄, P₂₄, and P₃₄ may respectively be arranged between the first to fourth open portions O₁₄, O₂₄, O₃₄, and O₄₄. In addition, first to fourth open portions O'₁₄, O'₄, O'₃₄, and O'₄₄ may each be arranged on the other side of the central terminal portion 110c, and first to third pad portions P'₁₄, P'₂₄, and P'₃₄ may respectively be arranged between the first to fourth open portions O'₁₄, O'₂₄, O'₃₄, and O'₄₄.

Referring to FIG. 10, a state in which the first to third pad portions P₁, P₂, and P₃ are arranged on a layer in corresponding positions between the first to fourth open portions O₁, O₂, O₃, and O₄, respectively, may be confirmed. Accordingly, a phenomenon in which a step-difference is formed on an upper side of a connector as a pad of an first layer, which is an uppermost layer, is pressed downward, and according to a structure in which a plurality of first to third pad portions P₁, P₂, P₃, P'₁, P'₂, and P'₃ are spaced apart from each other and a structure in which the plurality of first to third pad portions P₁, P₂, P₃, P'₁, P'₂, and P'₃ are arranged on both sides of the central terminal portion 110c, the overall rigidity of the connector may be improved, and tensile strength and shear strength of the connector may be improved.

In addition, in a battery pack connector according to an embodiment, the possibility of the connector falling off or being damaged during attachment/detachment may be minimized through a pad structure of the battery pack connector.

As such, the disclosure has been described with reference to the embodiments shown in the drawings, but this is only an example. While the disclosure has been particularly shown and described with reference to embodiments thereof, it will be understood by those of ordinary skill in the art that various changes in form and details may be made therein without departing from the scope of the following claims.

Specific technical details described in the embodiments are examples, and do not limit the technical scope of the embodiments. For the sake of brevity, description of general techniques and configurations in the related art may be omitted.

Furthermore, the connecting lines, or connectors shown in the various figures presented are intended to represent functional relationships and/or physical or logical couplings between the various elements, according to embodiments. It should be noted that many alternative or additional functional relationships, physical connections or logical connections may be present in a practical device. Moreover, no item or component is essential to the practice of the inventive concept unless the element is specifically described as "essential" or "critical".

The use of the terms "a" and "an" and "the" and similar referents in the context of describing the disclosure and claims are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein.

Also, the steps of all methods described herein can be performed in any suitable order unless otherwise indicated herein or otherwise clearly contradicted by context.

The disclosure is not limited to the described order of the steps. The use of any and all examples, or language (e.g., "such as") provided herein, is intended merely to better illuminate the inventive concept and does not pose a limitation on the scope of the inventive concept unless otherwise claimed.

Numerous modifications and adaptations will be readily apparent to one of ordinary skill in the art without departing from the scope of the claims.

According to a battery pack connector according to an embodiment, shear strength and tensile strength of the battery pack connector may be improved.

In addition, in a battery pack connector according to an embodiment, the possibility of the connector falling off or being damaged during attachment/detachment may be minimized through a pad structure of the battery pack connector.

The effects of the disclosure are not limited to the effects mentioned above, and other effects not mentioned will be clearly understood by those skilled in the art from the description of the claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A battery pack connector in which respective pad portions are arranged at corresponding positions in respective layers in central portions of the respective layers.

2. The battery pack connector of claim 1, wherein first, second, and third pad portions are arranged between first, second, third, and fourth open portions, respectively, in the respective layers of the battery pack connector.

3. The battery pack connector of claim 2, wherein the first, second, and third pad portions are arranged on each of both sides of a central terminal portion in the respective layers.

4. The battery pack connector of claim 2 or claim 3, wherein the second and third pad portions are respectively arranged on either side of the first pad portion to be spaced apart from each other.

5. The battery pack connector of claim 4, wherein the second and third pad portions are symmetrically disposed with respect to the first pad portion.
